# EUROPEAN PATENT APPLICATION

(11) **EP 1 901 531 A1**
(43) Date of publication of application: **19.03.2008**
(21) Application number: 07116216.8
(22) Date of filing: 12.09.2007
(51) Int. Cl.: H04M 1/02

(54) **Mobile communication terminal for multimedia services**

(30) Priority: 12.09.2006 KR 20060088019
(71) Applicant: Samsung Electronics Co., Ltd., Suwon-si, Gyeonggi-Do (KR)
(72) Inventor: Park, Jun-Sang c/o Samsung Electronics Co., Ltd., Gyeonggi-do (KR); Lee, Chang-Soo c/o Samsung Electronics Co., Ltd., Gyeonggi-do (KR); Kim, Joon-Suh c/o Samsung Electronics Co., Ltd., Gyeonggi-do (KR)
(74) Representative: Grünecker, Kinkeldey, Stockmair & Schwanhäusser Anwaltssozietät

(57) **Abstract**

A mobile communication terminal for multimedia services is disclosed. The mobile communication terminal includes a keypad unit, a display unit which swings from the keypad unit while being maintained parallel with the keypad unit, thereby switching from a portrait mode to a landscape mode, and a dual hinge unit which connects the display unit with the keypad unit in such a manner that the display unit can swing from the keypad unit with respect to a first hinge axis that is oriented perpendicular to a top face of the keypad unit and a second hinge axis that is parallel with the first hinge axis and is oriented perpendicular to a top face of the display unit.

## Description

### BACKGROUND OF THE INVENTION

### 1. Field of the Invention

The present invention relates generally to a mobile communication terminal such as a Digital Multimedia Broadcasting (DMB) phone, a game phone, a chatting phone, a camera phone, an MP3 phone, a cellular phone, a Personal Communication Service (PCS) phone, a Personal Digital Assistant (PDA), and a Hand Held Phone (HHP), and in particular, to a mobile communication terminal that is convenient for viewing moving pictures.

### 2. Description of the Related Art

In terms of portability, mobile communication terminals now tend to be compact, slim, and light, and have excellent gripping properties and also include multimedia availability for a wide variety of functions. Future mobile communication terminals are expected to incorporate greater multi-functionality and multi-purpose utilization. Future mobile communication terminals will also be more compact and lightweight, and will be modified to be suitable for various multimedia environments or Internet environments.

Conventional mobile communication terminals may be classified into various types according to their appearance in consideration of portability and convenience in use, such as bar-type communication terminals and folder-type communication terminals. The bar-type communication terminal has a single housing shaped like a bar in which data input/output devices, an antenna device, and transmission/reception devices are mounted. The folder-type communication terminal has a folder coupled to a single bar-shaped housing by a hinge device in such a manner that the folder can be rotated in order to be folded towards and unfolded away from the housing. For example, in a folder-type communication terminal, a folder is rotatably coupled to a main body by a hinge device, keys are disposed in the main body, and a display unit is disposed in the folder of the folder-type communication terminal, contributing to miniaturization and portability. A folder-type communication terminal is disclosed in U.S Patent No. 6,865,406 , and is assigned to the assignee of to the present application. In the disclosed folder-type portable communication terminal, a camera lens housing is mounted in a hinge device.

However, the folder-type communication terminal may not be convenient for viewing moving pictures. For example, the folder-type communication terminal cannot provide a wide display unit, causing a user to feel dissatisfaction with watching a displayed screen in moving picture-related modes. Moreover, keys associated with a phone mode are also used in a camera mode, causing inconvenience to unskilled users.

Additionally, the mobile communication terminals may be further classified as swing-type communication terminals and sliding-type communication terminals based upon the manner of opening and closing the communication terminals. In the swing-type communication terminals, two housings are coupled to each other to allow one housing to rotate relative to the other while facing each other. In the sliding-type communication terminal, two housings are coupled to each other to allow one housing to slide along a longitudinal direction to open or close the sliding-type communication terminal.

For example, in the sliding-type communication terminal, a main body and a slider are coupled to each other by a sliding module while facing each other, a plurality of keys are disposed in the main body, and a display unit is disposed in the slider. Such a structure is useful for a wide display unit and provides easiness in opening/closing operations. The sliding-type communication terminal is disclosed in detail in Korean Patent No. 2002-71911. In the sliding-type communication terminal, a plurality of keys are disposed in a main body housing and a display unit is mounted in a sliding housing.

The swing-type communication terminal is disclosed in detail in U.S. Patent No. 7,158, 371, which is commonly assigned to the assignee of the present application.

In the swing-type communication terminal, there is no inconvenience caused by a data input operation and a displayed-data check operation in a phone mode like voice communication or text message transmission. However, in multimedia environments, the promptness and accuracy of a data input operation such as key pressing degrade in moving picture-related modes and a wide screen cannot be provided in a display unit.

The foregoing problems may be solved by increasing the size of the mobile communication terminal, mounting a wide display unit in the mobile communication terminal, and disposing more keys in the mobile communication terminal, but such a solution goes against the miniaturization of the mobile communication terminal and causes inconvenience in carrying the mobile communication terminal.

### SUMMARY OF THE INVENTION

An object of the present invention is to address at least the above problems and/or disadvantages and to provide at least the advantages described below. Accordingly, an aspect of the present invention is to provide a mobile communication terminal for multimedia services, which is convenient for viewing moving pictures.

Another aspect of the present invention is to provide a mobile communication terminal for multimedia services, which provides a touch key in a lateral face of a display unit in a moving picture viewing mode, thereby improving key manipulation while being hand held.

Another aspect of the present invention is to provide a mobile communication terminal for multimedia services, which provides easiness in moving a display unit from a portrait mode to a landscape mode while being hand held.

Another aspect of the present invention is to provide a mobile communication terminal for multimedia services, which can be used as a bar type and a swing type, thereby exploiting the advantages of both types.

Another aspect of the present invention is to provide a mobile communication terminal for multimedia services, which provides a wide display unit and thus facilitates viewing of moving pictures.

Another aspect of the present invention is to provide a mobile communication terminal for multimedia services, which has a rigidity reinforcement unit in a hinge unit to reinforce structural rigidity around the hinge unit.

Another aspect of the present invention is to provide a mobile communication terminal for multimedia services, in which a keypad unit is positioned below a display unit even when the display unit is in a landscape mode, thereby improving the gripping properties and facilitating key manipulation.

This object is solved by the features of the independent claim.

Advantageous embodiments are disclosed by the subclaims.

### BRIEF DESCRIPTION OF THE DRAWINGS

The above and other features and advantages of an exemplary embodiment of the present invention will become more apparent from the following detailed description when taken in conjunction with the accompanying drawings, in which:
FIG. 1 is a perspective view of a mobile communication terminal for multimedia services according to an exemplary embodiment of the present invention, which is in use mainly in a phone mode;
FIG. 2 is a perspective view of a mobile communication terminal for multimedia services according to an exemplary embodiment of the present invention, which is in use mainly in moving picture-related modes; and
FIG. 3 is a perspective view illustrating the bottom of FIG. 2.

### DETAILED DESCRIPTION OF THE EXEMPLARY EMBODIMENT

The matters defined in the description such as a detailed construction and elements are provided to assist in a comprehensive understanding of an exemplary embodiment of the invention. Accordingly, those of ordinary skill in the art will recognize that various changes and modifications of the embodiment described herein can be made without departing from the scope of the invention. Throughout the accompanying drawings, the same drawing reference numerals will be understood to refer to the same elements, features and structures. Also, descriptions of well-known functions and constructions are omitted for clarity and conciseness.

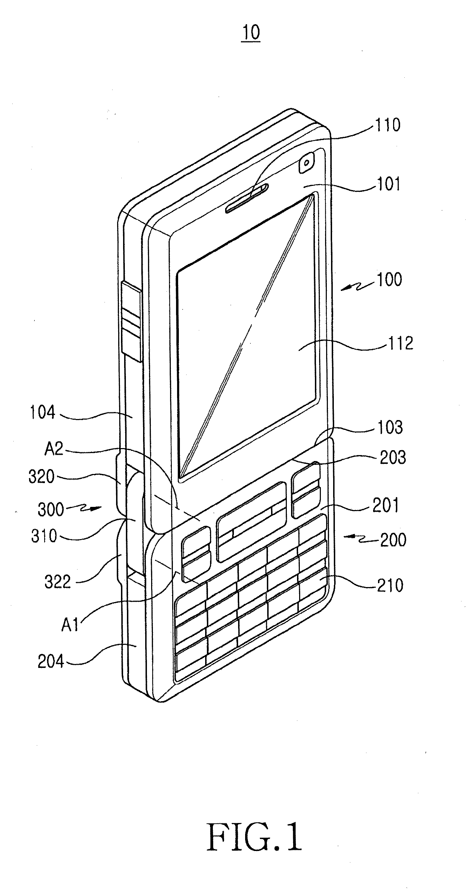

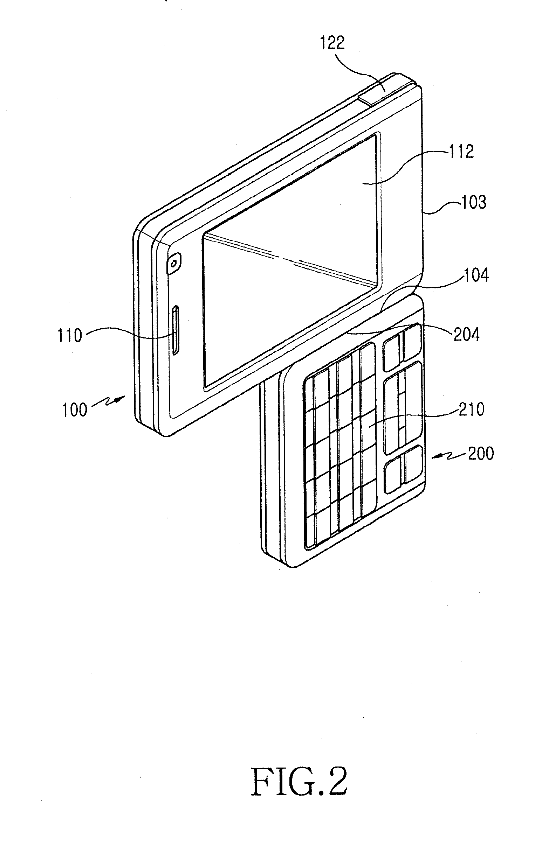

As illustrated in FIGs. 1 through 3, a mobile communication terminal 10 according an exemplary embodiment of to the present invention is convenient in both a phone mode and moving picture-related modes. The mobile communication terminal 10 includes a keypad unit 200, a display unit 100, and a dual hinge unit 300 that connects the display unit 100 with the keypad unit 200 in such a manner that the display unit 100 can swing. The display unit 100 swings from the keypad unit 200 while being maintained parallel with the keypad unit 200, thereby switching from a portrait mode to a landscape mode. The portrait mode means the state of the display unit 100 as illustrated in FIG. 1 and the landscape mode means the state of the display unit 100 as illustrated in FIG. 2.

The dual hinge unit 300 connects the display unit 100 with the keypad unit 200 in such a manner that the display unit 100 can swing with respect to a first hinge axis A1 that is oriented perpendicular to a top face 201 of the keypad unit 200 and a second hinge axis A2 that is parallel with the first hinge axis A 1 and is oriented perpendicular to a top face 101 of the display unit 100. More specifically, a first lateral face 203 of the keypad unit 200 is in face-to-face contact with a first lateral face 103 of the display unit 100, as illustrated in FIG. 1. After swinging the display unit 100, a second lateral face 204 that is adjacent to the first lateral face 203 of the keypad unit 200 comes into face-to-face contact with a second lateral face 104 that is adjacent to the first lateral face 103 of the display unit 100, as illustrated in FIG. 2.

The keypad unit 200 acts as a gripping unit at all times irrespective of swing of the display unit 100. FIGs. 1 and 2 show the keypad 200 acting as a gripping unit. In other words, the keypad 200 is positioned below the display unit 100 to act as a gripping unit irrespective of whether the display unit 100 swings.

The dual hinge unit 300 includes a dual hinge member 310 whose one end portion is connected with a corner portion of one side of the keypad unit 200 to provide the first hinge axis A1 and whose other end portion is connected with a corner portion of one side of the display unit 100 to provide the second hinge axis A2.

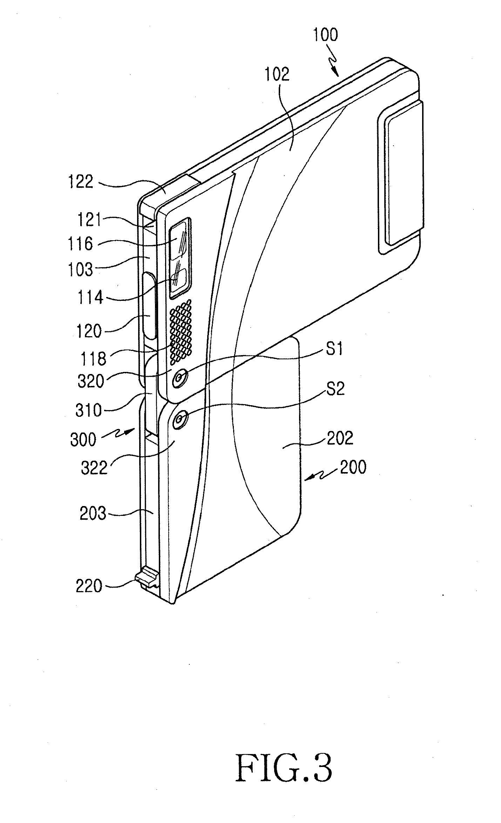

The dual hinge unit 300 further includes a first rigidity reinforcement unit 322 formed at a corner portion of one side of a bottom face 202 of the keypad unit 200 and a second rigidity reinforcement unit 320 formed at a corner portion of one side of a bottom face 102 of the display unit 100. In other words, the first rigidity reinforcement unit 322 and the second rigidity reinforcement unit 320 are formed around the first hinge axis A1 and the second hinge axis A2, respectively. The first rigidity reinforcement unit 322 and the second rigidity reinforcement unit 320 reinforce structural rigidity for rotation of the display unit 100 by preventing force delivered by rotation of the dual hinge unit 300 from being out of balance. The first rigidity reinforcement unit 322 protrudes to a predetermined thickness from the bottom face 202 of the keypad unit 200 and the second rigidity reinforcement unit 320 protrudes to a predetermined thickness from the bottom face 102 of the display unit 100. The top and bottom faces of the dual hinge member 310 are almost hidden by the keypad unit 200 and the display unit 100, but one lateral face or the other lateral face of the dual hinge member 310 is selectively opened by swing of the display unit 100. One lateral face of the dual hinge member 310 is exposed in FIG. 1 and the other lateral face of the dual hinge member 310 is exposed in FIG. 3.

The display unit 100 includes a first speaker device 110 (FIG. 1) disposed on its top face 101, a second speaker device 118 (FIG. 3) disposed on its bottom face 102, and a camera lens 114 disposed next to the second speaker device 118. A reference numeral 116 refers to an illumination device 116. The second speaker device 118, the camera lens 114, and the illumination device 116 are disposed in the second rigidity reinforcement unit 320.

As illustrated in FIG. 3, the first lateral face 103 of the display unit 100 includes a touch key 120 to allow a user to conveniently input data while gripping the keypad unit 200 after swinging the display unit 100. The touch key 120 is hidden at all times before swinging the display unit 100 as illustrated in FIG. 1 and is exposed at all times after swinging the display unit 100 as illustrated in FIG. 2 or 3.

As illustrated in FIG. 3, a locking means for maintaining the mobile communication terminal in a bar-type form as in FIG. 1 is provided between the keypad unit 200 and the display unit 100. The locking means includes a locker 220 formed in the first lateral face 203 of the keypad unit 200, an opening 121 which is formed in the first lateral face 103 of the display unit 100 and into which the locker 220 is inserted, and a moving knob 122 which releases the locked state of the inserted locker 220. The locked state as illustrated in FIG. 1 can be maintained by the locking means and, upon release of the locked state, a swing operation can be performed as illustrated in FIG. 2.

As illustrated in FIGs. 1 and 2, the keypad unit 200 is positioned below the display unit 100 at all times irrespective of the swinging of the display unit 100, thereby providing improved gripping property when being gripped by a hand and facilitating keypad manipulation. In FIG. 1, the keypad unit 200 is positioned below the display unit 100 before swinging of the display unit 100. In FIG. 2, the keypad unit 200 is positioned below the display unit 100 after swinging of the display unit 100.

The mobile communication terminal according to an exemplary embodiment of the present invention is used in a phone mode when being in a bar-type form as illustrated in FIG. 1 and is used in moving picture-related modes when being in a '┐' form as illustrated in FIG. 2.

According to an exemplary embodiment of the present invention, when the display unit 100 swings from a state as illustrated in FIG. 1 to a state as illustrated in FIG. 2, the user can conveniently swing the display unit 100 while holding the mobile communication terminal by a hand and can easily move the display unit 100 from the portrait mode to the landscape mode. The user's swing of the display unit 100 means that a right-handed user swings the display unit 100 counterclockwise using the thumb when gripping the mobile communication terminal by the right hand.

Reference numerals S 1 and S2 indicate screws used as engagement units. A corner portion of one side of the keypad unit 200 where the first hinge axis A 1 is provided and a corner portion of one side of the display unit 100 where the second hinge axis A2 is provided have predetermined curved radiuses for smooth swing of the display unit 100.

As described above, the mobile communication terminal according to an exemplary embodiment of the present invention is convenient in the phone mode and in moving picture-related modes. The mobile communication terminal also provides the wide display unit in the landscape mode and the keypad unit below the display unit, thereby improving the gripping properties and facilitating key manipulation with respect to the keypad unit. Moreover, since the touch key in a lateral face of the display unit in a moving picture viewing mode, the user can conveniently input data while holding the mobile communication terminal by a hand. Furthermore, the user can easily move the display unit from the portrait mode to the landscape mode while being hand held. Additionally, rigidity reinforcement units around the first hinge axis and the second hinge axis are provided in order to improve the reliability of a product.

While the invention has been shown and described with reference to an exemplary embodiment thereof, it will be understood by those skilled in the art that various changes in form and details may be made therein without departing from the scope of the invention.

## Claims

1. A mobile communication terminal (10) for multimedia services, comprising:
a keypad unit (200);
a display unit which swings from the keypad unit (200), and
a dual hinge unit (300), which connects the display unit (100) with the keypad unit (200), **characterized in that** the display unit (100) is adapted to switch from a portrait mode to a landscape mode by swinging from the keypad unit (200), the dual hinge unit (300) comprises two hinge axes, wherein the display unit (100) is adapted to swing from the keypad unit (200) with respect to a first hinge axis (A1) that is oriented perpendicular to a top face (201) of the keypad unit (200) and a second hinge axis (A2) that is parallel with the first hinge axis (A1) and is oriented perpendicular to a top face (101) of the display unit (100).

2. The mobile communication terminal of claim 1, wherein a first lateral face (203) of the keypad unit (200) is in face-to-face contact with a first lateral face (103) of the display unit (100), and a second lateral face (204) that is adjacent to the first lateral face (203) of the keypad unit (200) is in face-to-face contact with a second lateral face (104) that is adjacent to the first lateral face (103) of the display unit (100) after swinging the display unit (100).

3. The mobile communication terminal of claim 1, wherein the keypad unit (200) acts as a gripping unit at all times irrespective of a swinging of the display unit (100).

4. The mobile communication terminal of claim 1, wherein the dual hinge unit (300) comprises a dual hinge member (310) having one end portion connected with a corner portion of one side of the keypad unit where first and second lateral faces of the keypad unit meet to provide the first hinge axis (A1) and an other end portion connected with a corner portion of one side of the display unit where first and second lateral faces of the display unit meet to provide the second hinge axis (A2).

5. The mobile communication terminal of claim 4, wherein the dual hinge unit further comprises a first rigidity reinforcement unit (322) formed at a corner portion of one side of a bottom face (202) of the keypad and a second rigidity reinforcement unit (320) formed at a corner portion of one side of a bottom face (102) of the display unit (100), thereby reinforcing rigidity for rotation of the display unit.

6. The mobile communication terminal of claim 4, wherein the dual hinge member (310) is mounted in such a manner that one of one lateral face and the other lateral face of the dual hinge member is exposed.

7. The mobile communication terminal of one of the claims 1 to 6, wherein the display unit (100) comprises:
a first speaker device (110) disposed on the top face (101) of the display unit (100);
a second speaker device (118) disposed on a bottom face (102) of the display unit; and
a camera lens (114) disposed next to the second speaker device (118).

8. The mobile communication terminal of claim 2, wherein the display unit (100) further comprises a touch key (120) in the first lateral face (103) of the display unit (100) in order to allow a user to conveniently input data while gripping the keypad unit (200) after the swinging of the display unit.

9. The mobile communication terminal of claim 1, further comprising a locking means (220, 122, 121) between the keypad unit (200) and the display unit (100) in order to maintain the mobile communication terminal in a bar-type form.

10. The mobile communication terminal of claim 9, wherein the locking means (220, 122, 121) comprises:
a locker (220) formed in a first lateral face (203) of the keypad unit (200);
an opening (121) which is formed in a first lateral face (103) of the display unit (100) and into which the locker is inserted; and
a moving knob (122) which releases the locked state of the locker (220) inserted into said opening (121).

11. The mobile communication terminal of one of the previous claims, wherein the mobile communication terminal is oriented such that the keypad unit (200) is positioned below the display unit (100) at all times irrespective of swinging of the display unit (100), thereby facilitating manipulation with respect to keys (210) disposed on the top face (201) of the keypad unit (200).

12. The mobile communication terminal according to claim 1, **characterized in that** said dual hinge unit (300) includes a dual hinge member (310) having one end portion connected with a corner portion of one side of the keypad unit (100) and another end portion connected with a corner portion of one side of the display unit (200), wherein the corner portions are arranged where first and second lateral faces of the keypad unit and the display unit, respectively, meet, and wherein the mobile communication terminal is oriented such that the keypad unit (200) is positioned below the display unit (100) at all times, thereby improving a gripping property and facilitating key manipulation.

13. The mobile communication terminal of claim 12, wherein the display unit (100) comprises a touch key (120) in a lateral face of the display unit (100) and the touch key is hidden at all times before a swinging of the display unit and is exposed at all times after the swinging of the display unit.

14. The mobile communication terminal of claim 12, further comprising rigidity reinforcement units (320, 322) around the first hinge axis (A1) and the second hinge axis (A2) in order to provide structural rigidity around the first hinge axis and the second hinge axis, wherein a first rigidity reinforcement unit (322) protrudes a predetermined thickness from a bottom face (202) of the keypad unit (200) in a corner portion of one side of a bottom face (102) of the display unit (100) and a second rigidity reinforcement unit (320) that protrudes a predetermined thickness from the bottom face (102) of the display unit (100) in a corner portion of one side of the bottom face (202) of the display unit (200).

15. The mobile communication terminal of claim 12, wherein the dual hinge member (310) is mounted in such a manner that one of one lateral face and the other lateral face of the dual hinge member is exposed.

16. The mobile communication terminal of claim 12, wherein the mobile communication terminal is maintained in a bar-type form before the swinging of the display unit (100) and is maintained in a '┐' form after the swinging of the display unit.
